# EUROPEAN PATENT APPLICATION

(11) **EP 2 657 695 A2**
(43) Date of publication of application: **30.10.2013**
(21) Application number: 13165525.0
(22) Date of filing: 26.04.2013
(51) Int. Cl.: G01N 29/22, G01N 27/90, G01N 29/28, H01F 7/02

(54) **Apparatus and method for attaching a sensing device**

(30) Priority: 27.04.2012 US 201213458679
(71) Applicant: General Electric Company, Schenectady, New York 12345 (US)
(72) Inventor: Meyer, Paul Aloysius, Lewiston, PA Pennsylvania 17044 (US); Cahill, James Richard, Lewistown, PA Pennsylvania 17044 (US); Matthews, Fred Timothy, Lewistown, PA Pennsylvania 17044 (US); Krohn, Matthew Harvey, Lewiston, PA Pennsylvania 17044 (US)
(74) Representative: Picker, Madeline Margaret

(57) **Abstract**

An apparatus, system, and method for attaching a sensing device 20 to a target object 10. The apparatus includes one or more magnets 112 that attach the apparatus to a target object. The sensing device 20 is coupled to the target object with a coupling material 30 and is held in place against the target object 10 by the apparatus.

## Description

The subject matter disclosed herein relates to an apparatus, system, and method for attaching a sensing device to a target object.

Several industries (e.g., oil and gas, refinery, chemical, power generation) require the transport of fluid (e.g., liquids or gases) through pipes. Nondestructive testing systems can be placed on the outer surface of these pipes to monitor corrosion/erosion of the pipes, including corrosion/erosion on the interior of the pipe walls. One example of a nondestructive testing system used to monitor corrosion/erosion of a pipe is an ultrasonic testing system. When conducting ultrasonic testing of a pipe, an ultrasonic pulse is emitted from a probe coupled to the outer surface of the pipe and passed through the pipe. As the ultrasonic pulse passes into and through the pipe, various pulse reflections called echoes are reflected back to the probe as the pulse interacts with the outer surface of the pipe, internal structures, voids or occlusions within the pipe, and with the inner surface (or back wall) of the pipe. The echo signals can be displayed on a screen with echo amplitudes appearing as vertical traces and time of flight or distance as horizontal traces. By tracking the time difference between the transmission of the ultrasonic pulse and the receipt of the echoes, various characteristics of the pipe can be determined, including pipe thickness. If the thickness of the pipe at the location of the ultrasonic testing system decreases over time (e.g., as would be shown be a reduction in the time of flight of the back wall echo), this can be an indication of corrosion/erosion.

In some nondestructive testing systems, the probe or other sensing device is permanently coupled to the outer surface of the pipe to continuously monitor corrosion/erosion at that location. The sensing device is attached to the pipe using a coupling material that has sufficient adhesive properties to hold the sensing device in place after curing. While the coupling material is curing, the sensing device must be held in place either manually or through another mechanism.

The discussion above is merely provided for general background information and is not intended to be used as an aid in determining the scope of the claimed subject matter.

An apparatus, system, and method for attaching a sensing device to a target object. The apparatus includes one or more magnets that attach the apparatus to a target object. The sensing device is coupled to the target object with a coupling material and is held in place against the target object by the apparatus. An advantage that may be realized in the practice of some disclosed embodiments is that the apparatus facilitates attachment of the sensing device during the curing of the coupling material or eliminates the need for adhesive properties in the coupling material.

In one embodiment an apparatus is disclosed comprising a first layer comprising one or more magnet cavities, one or more magnets disposed within the one or more magnet cavities, and a second layer over the first layer encasing the one or more magnets.

In another embodiment a sensing system for inspecting a target object is disclosed. The sensing system comprises a sensing device comprising a first surface and a second surface, a coupling material between the first surface of the sensing device and the target object, and a mat magnetically coupled to the target object and contacting the second surface of the sensing device.

In yet another embodiment a method for attaching a sensing device to a target object is disclosed. The method comprises the steps of applying a coupling material between a surface of the sensing device and the target object, pressing the surface of the sensing device onto the target object, and placing a mat over the sensing device, the mat being magnetically coupled to the target object to retain the sensing device against the target object.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 shows a sensing device coupled to a target object with a coupling material;
FIG. 2 is a cross-sectional view of the sensing device shown in FIG. 1 with an exemplary magnetic mat disposed thereon;
FIG. 3 is a schematic view of an exemplary magnetic mat with a portion being cut away to show the internal magnets; and
FIG. 4 is a flow diagram of an exemplary method for attaching a sensing device to a target object with a magnetic mat.

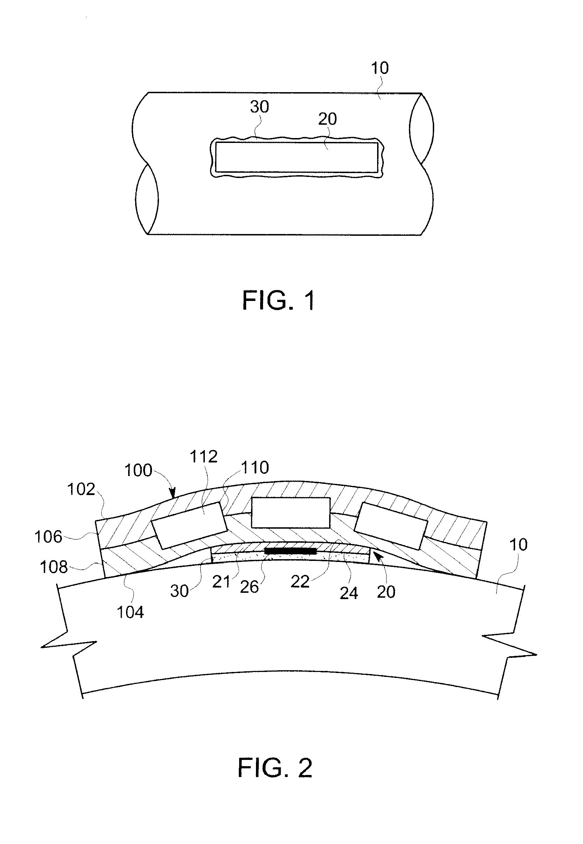

Referring now to the figures, FIG. 1 shows a sensing device 20 attached to a target object 10 (e.g., pipe, tube, or other conduit) with coupling material 30. In one embodiment, the sensing device 20 transmits and receives ultrasonic signals to monitor the corrosion/erosion of the target object 10. The coupling material 30 transmits ultrasonic signals from the sensing device 20 to the target object 10.

FIG. 2 is a cross-sectional view of an exemplary magnetic mat 100 magnetically coupled to the target object 10. The sensing device 20 is disposed between the magnetic mat 100 and the target object 10 and is held in place against the target object 10 by the magnetic mat 100. The substrate 21 of the sensing device 20 has a back (first) surface 22 and a front (second) surface 24, with the front surface 24 of the substrate 21 facing the target object 10.

The sensing device 20, further contains a sensing element 26, such as in one embodiment, a piezoelectric element (e.g., a ceramic piezoelectric transducer). It will be understood that other types of sensing devices and sensing elements can be used. In one embodiment, the substrate is a flexible substrate that can conform to the shape of the target object 10. While the sensing device 20 is shown as being disposed along the length of the target object 10, it is understood that the sensing device 20 can also be disposed along the circumference of the target object 10.

A coupling material 30 is disposed between the front surface 24 of the sensing device 20 and the target object 10. The coupling material 30 transmits ultrasonic signals from the sensing element 26 to the target object 10. The coupling material 30 may be any suitable coupling material sufficient to transfer ultrasonic signals. In one embodiment the coupling material is also an adhesive, including, but not limited to, one-part thermosettings, heat cured thermosettings, moisture cured thermosettings, two-part thermosettings, thermoplastics, cold-flow adhesives, epoxies, urethanes, polyimides, cyanoacrylates, urethanes, acrylics, silicones or hot melt adhesives. The coupling material 30 may be applied to the front surface 24 of the sensing device 20 and/or directly to the surface of the target object 10.

As shown in FIG. 2, a magnetic mat 100 is placed over the back surface 22 of the sensing device 20. The magnetic mat 100 magnetically couples to the target object 10, holding the sensing device 20 in place. In one embodiment, an adhesive coupling material 30 is used to attach and acoustically couple the sensing device 20 to the target object 10, and the magnetic mat 100 is removed once the adhesive coupling material 30 has cured.

In another embodiment, the magnetic mat 100 remains during the operation of the sensing device 20. Since the magnetic mat 100 can hold the sensing device 20 stationary relative to the target object 10, the coupling material 30 need not be an adhesive.

The magnetic mat 100 has a front (first) surface 104 and back (second) surface 102. The front surface 104 of the magnetic mat 100 can have a smooth surface that is in contact with the back surface 22 of the sensing device 20. The magnetic mat 100 magnetically couples to the target object 10 to hold the sensing device 20 stationary relative to the target object 10. While a plurality of magnets 112 and cavities 110 are shown, it is understood that any number of magnets (including one) could be used to couple the magnetic mat to the target object. In one embodiment, the base (first) layer 108, the cover (second) layer 106 or both are made from a magnetic material, thereby eliminating the need for individual magnets 112. In another embodiment, the plurality of magnets 112 can be placed between two layers 106, 108 without the use of cavities 110.

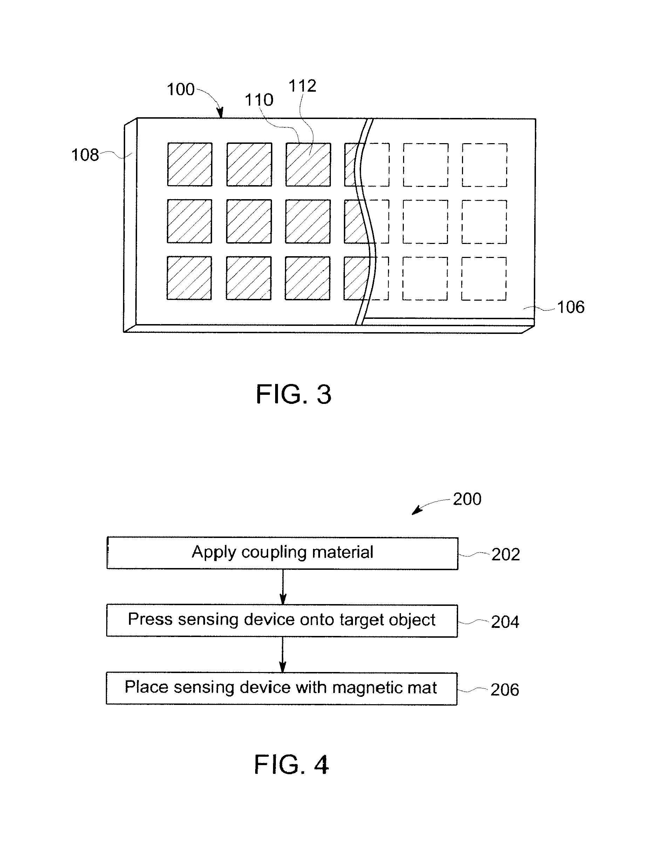

FIG. 3 is a schematic view of an exemplary magnetic mat 100 with a portion being cut away to show the internal magnets 112. The magnetic mat 100 has a base layer 108 with a plurality of magnet cavities 110 disposed therein. Magnets 112 are placed in the magnet cavities 110. A cover layer 106 is formed over the base layer 108 that encases the magnets 112. The base layer 108 and the cover layer 106 can be formed from the same or distinct materials.

The base layer 108 and the cover layer 106 are formed from flexible materials to conform to the shape of the target object 10. In one embodiment, the base layer 108 is a formable material to better conform to the shape of the sensing device 20. In one embodiment, the base layer 108 and the cover layer 106 are a suitable elastomeric material, such as a cured RTV silicon rubber.

In one embodiment, an elastomer is poured into a tool and allowed to cure to form the base layer 108. The tool is shaped to form the magnet cavities 110 in the base layer 108. Once cured, the magnets 112 are placed into the magnet cavities 110. While 18 square magnets and magnet cavities are shown in FIG. 3, it is understood that any number or shape of magnets and magnet cavities may be used so long as the magnetic field is sufficient to magnetically couple to a target object. In one embodiment, at least 12 magnets and magnet cavities are used. In one embodiment, rare earth magnets are placed in the magnet cavities. When a plurality of magnets are used, the polarity of each magnet is opposite the polarity of any magnet adjacent to that magnet.. To form the cover layer 106, a silicon rubber is poured over the base layer 108 and the magnets 112. The cover layer 106 bonds to the base layer 108 and encases the magnets 112. Once cured, the base layer 108 and the cover layer 106 are removed from the tooling.

Referring now to FIG. 4, there is shown a method 200 for attaching a sensing device to a target object. At step 202, a coupling material is applied between front side of the substrate and the target object (e.g., can be applied to the front side of the substrate and/or the target object). At step 204, the sensing device is pressed against the target object. At step 206, a magnetic mat is placed over the sensing device such that the magnetic mat magnetically couples to the target object to retain the sensing device. In one embodiment, the coupling material is an adhesive coupling material and the magnetic mat is removed after allowing the adhesive coupling material to cure. The mat can be removed after a predetermined amount of time sufficient to allow curing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An apparatus comprising:
   a first layer comprising one or more magnet cavities;
   one or more magnets disposed within the one or more magnet cavities; and
   a second layer over the first layer encasing the one or more magnets.
2. The apparatus of clause 1, wherein the first layer is made of a cured RTV silicon rubber.
3. The apparatus of any preceding clause, wherein the second layer is made of a cured RTV silicon rubber.
4. The apparatus of any preceding clause, wherein a magnet is disposed in each of the one or more magnetic cavities.
5. The apparatus of any preceding clause, wherein each of the one or more magnets has a magnetic polarity opposite the magnetic polarity of any magnet directly adjacent thereto.
6. The apparatus of any preceding clause, wherein the one or more magnets are at least twelve magnets.
7. A sensing system for inspecting a target object, the sensing system comprising:
   a sensing device comprising a first surface and a second surface;
   a coupling material between the first surface of the sensing device and the target object; and
   a mat magnetically coupled to the target object and contacting the second surface of the sensing device.
8. The sensing system of any preceding clause, wherein the sensing device comprises a flexible circuit.
9. The sensing system of any preceding clause, wherein the sensing device comprises one or more sensing elements.
10. The sensing system of any preceding clause, wherein one or more sensing elements are piezoelectric elements.
11. The sensing system of any preceding clause, wherein the coupling material is an adhesive coupling material.
12. The sensing system of any preceding clause, wherein the coupling material is selected from the group consisting of heat cured thermosettings, moisture cured thermosettings, two-part thermosettings, thermoplastics, cold-flow adhesives, epoxies, urethanes, polyimides, cyanoacrylates, urethanes, acrylics, silicones and hot melt adhesives.
13. The sensing system of any preceding clause, wherein the magnet mat further comprises a first layer and a second layer, the first layer comprising one or more magnet cavities with one or more magnets disposed therein.
14. The sensing system of any preceding clause, wherein the second layer encases the one or more magnets.
15. The sensing system of any preceding clause, wherein the first layer and the second layers are made of a cured RTV silicon rubber.
16. The sensing system of any preceding clause, wherein each of the one or more magnets has a magnetic polarity opposite the magnetic polarity of any magnet directly adjacent thereto.
17. The sensing device of any preceding clause, wherein the one or more magnets are at least twelve magnets.
18. A method for attaching a sensing device to a target object comprising the steps of:
   applying a coupling material between a surface of the sensing device and the target object;
   pressing the surface of the sensing device onto the target object; and
   placing a mat over the sensing device, the mat being magnetically coupled to the target object to retain the sensing device against the target object.
19. The method of any preceding clause, wherein the coupling material is an adhesive coupling material, further comprising the step of removing the mat after allowing the adhesive coupling material to cure.
20. The method of any preceding clause, wherein the coupling material is an adhesive coupling material, further comprising the step of removing the mat after a predetermined amount of time.

## Claims

1. An apparatus comprising:
a first layer (108) comprising one or more magnet cavities (110);
one or more magnets (112) disposed within the one or more magnet cavities (110); and
a second layer (106) over the first layer (108) encasing the one or more magnets (112).

2. The apparatus of claim 1, wherein the first layer (108) is made of a cured RTV silicon rubber, and/or the second layer (106) is made of a cured RTV silicon rubber.

3. The apparatus of claim 1 or claim 2, wherein a magnet (112) is disposed in each of the one or more magnetic cavities.

4. The apparatus of claim 1, 2 or 3, wherein each of the one or more magnets (112) has a magnetic polarity opposite the magnetic polarity of any magnet directly adjacent thereto.

5. The apparatus of any preceding claim, wherein the one or more magnets (112) are at least twelve magnets.

6. A sensing system for inspecting a target object (10), the sensing system comprising:
a sensing device (20) comprising a first surface (24) and a second surface (22);
a coupling material (30) between the first surface (24) of the sensing device and the target object (10); and
a mat (100) magnetically coupled to the target object (10) and contacting the second surface (22) of the sensing device.

7. The sensing system of claim 6, wherein the sensing device (20) comprises a flexible circuit.

8. The sensing system of claim 7, wherein the sensing device (20) comprises one or more sensing elements, wherein, preferably, the one or more sensing elements (20) are piezoelectric elements.

9. The sensing system of claim 6, 7 or 8, wherein the coupling material (30) is an adhesive coupling material.

10. The sensing system of claim 9, wherein the coupling material (30) is selected from the group consisting of heat cured thermosettings, moisture cured thermosettings, two-part thermosettings, thermoplastics, cold-flow adhesives, epoxies, urethanes, polyimides, cyanoacrylates, urethanes, acrylics, silicones and hot melt adhesives.

11. The sensing system of any one of claims 6 to 10, wherein the magnet mat (110) further comprises a first layer (108) and a second layer (106), the first layer comprising one or more magnet cavities (110) with one or more magnets (112) disposed therein.

12. The sensing system of claim 11, wherein the second layer (106) encases the one or more magnets (112).

13. A method for attaching a sensing device to a target object comprising the steps of:
applying a coupling material (30) between a surface of the sensing device (20) and the target object (10);
pressing the surface of the sensing device (20) onto the target object; and
placing a mat (100) over the sensing device (20), the mat being magnetically coupled to the target object to retain the sensing device against the target object.

14. The method of claim 13, wherein the coupling material (30) is an adhesive coupling material, further comprising the step of removing the mat after allowing the adhesive coupling material to cure.

15. The method of claim 13 or claim 14, wherein the coupling material (30) is an adhesive coupling material, further comprising the step of removing the mat after a predetermined amount of time.
